# EUROPÄISCHE PATENTSCHRIFT

(11) **EP 1 717 420 B1**
(45) Veröffentlichungstag und Bekanntmachung des Hinweises auf die Patenterteilung: **22.10.2014**
(21) Anmeldenummer: 05009519.9
(22) Anmeldetag: 29.04.2005
(51) Int. Cl.: F01K 23/06, F01K 23/10, F02C 6/10, F02C 6/18, F02C 3/20

(54) **Kraftwerksanlage mit Luftzerlegungsanlage**
Power plant with air separation installation
Centrale d'énergie avec installation de séparation d'air

(43) Veröffentlichungstag der Anmeldung: 02.11.2006
(73) Patentinhaber: Siemens Aktiengesellschaft, 80333 München (DE); Renz, Ulrich, 52066 Aachen (DE)
(72) Erfinder: Renz, Ulrich Prof., 52076 Aachen (DE)

(56) Entgegenhaltungen:
- WO-A-01/79754
- WO-A-03/069132
- WO-A-2004/046523
- US-A- 5 724 805
- US-A1- 2003 101 725
- US-A1- 2005 067 346
- US-B1- 6 282 901

## Beschreibung

Die Erfindung bezieht sich auf eine Kraftwerksanlage mit einer Brennkammer, der ein kohlenstoffhaltiger Brennstoff und ein Oxidationsmittel zuführbar sind.

In einer mit einem fossilen Brennstoff befeuerten Kraftwerksanlage wird die Verbrennung eines kohlenstoffhaltigen Brennstoffs zum Antrieb eines Generators oder einer Arbeitsmaschine und somit im Allgemeinen zur Erzeugung elektrischer Energie genutzt. Der kohlenstoffhaltige Brennstoff ist dabei üblicherweise einer Brennkammer der Kraftwerksanlage zuführbar, wo er mit einem ebenfalls zugeführten Oxidationsmittel vermischt und anschließend zur Verbrennung gebracht wird. Die Kraftwerksanlage kann dabei beispielsweise ein direkt befeuerter Kessel zur Erzeugung von Dampf sein, der seinerseits zum Antrieb einer an einen Generator gekoppelten Dampfturbine benutzt wird. Alternativ oder zusätzlich können auch kombinierter Gas- und Dampfturbinenprozesse zum Einsatz kommen. Als Brennstoff kann insbesondere Erdgas, Öl oder Kohle vorgesehen sein. Für einen besonders hohen Wirkungsgrad für einen kohlebefeuerten Kessel kann insbesondere eine vorgeschaltete Kohlevergasung oder eine so genannte Druckkohlenstaub-Befeuerung vorgesehen sein.

Bei der Deckung des weltweiten Energiebedarfs nimmt Kohle als nutzbarer Energieträger auch in absehbarer Zukunft eine bedeutende Rolle ein. Problematisch bei der Nutzung von Kohle als Energieträger ist jedoch, dass damit konzeptbedingt ein vergleichsweise hoher Ausstoß an Kohlendioxidemissionen (CO₂) verbunden ist. Für einen großvolumigen Einsatz von Kohle als Energieträger sind daher Konzepte wünschenswert, bei denen, insbesondere im Hinblick auf weltweite Klimaschutzerfordernisse, bei vergleichsweise hohem Wirkungsgrad der Kohlendioxidausstoß besonders gering gehalten werden kann. Des Weiteren sollen die mit der Verbrennung fossiler Energieträger üblicherweise einhergehenden Freisetzungen von Stickoxiden (NOx) ebenfalls gering gehalten werden. Eine konsequente Einhaltung dieser Ziele ist aber üblicherweise mit erheblichem Herstellungs- und Betriebsaufwand für dafür geeignet ausgelegten Anlagen verbunden. WO-A-01/79754 zeigt ein Verbrennungsverfahren mit Sauerstoffanreicherung.

Der Erfindung liegt daher die Aufgabe zugrunde, eine Kraftwerksanlage der oben genannten Art anzugeben, bei der mit besonders gering gehaltenem Aufwand die anfallenden Emissionen an Kohlendioxid und an Stickoxiden besonders gering gehalten werden können.

Diese Aufgabe wird wie im Anspruch 1 bzw. Anspruch 6 angegeben erfindungsgemäß gelöst.

Die Erfindung geht dabei von der Überlegung aus, dass die bei der Verbrennung des fossilen Brennstoffs anfallenden Emissionen besonders gering gehalten werden können, indem die Verbrennungsatmosphäre über die Einspeisung eines geeigneten Oxidationsmittels geeignet gewählt wird. Besonders günstig ist dabei die Verbrennung in einer Sauerstoff-Kohlendioxid-Atmosphäre, bei der als Verbrennungsabgase lediglich noch Kohlendioxid und geringe Reststoffe anfallen, wobei Stickoxid-Emissionen nahezu vollständig entfallen. Das bei einer derartigen Verbrennung in stark angereicherter Form abgegebene Kohlendioxid kann dabei unter Vermeidung einer Abgabe an die Umwelt mit vergleichsweise einfachen Mitteln einer gezielten Weiterverwertung oder Entsorgung zugeführt werden.

Um die Verbrennung in einer derartigen Atmosphäre zu ermöglichen, sollte der Brennkammer daher anstelle von Luft als Oxidationsmittel Sauerstoff zugeführt werden. Dies ist erreichbar, indem der Brennkammer oxidationsmittelseitig eine Luftzerlegungsanlage vorgeschaltet ist, die aus zugeführter Ansaugluft die Bestandteile Stickstoff einerseits und Sauerstoff andererseits voneinander trennt. Der abgeschiedene Sauerstoffanteil kann dann als Oxidationsmittel der Brennkammer zugeführt werden. Bei der Vorschaltung einer derartigen Luftzerlegungsanlage vor die Brennkammer sollte jedoch der damit verbundene apparative Aufwand weitgehend gering gehalten werden. Dies ist erreichbar, indem die Luftzerlegungsanlage nach dem so genannten Hochtemperatur-Membran-Verfahren ausgelegt ist.

Bei derartigen Hochtemperatur-Membran-Verfahren kommen Sauerstoffionen leitende Membranen, vorzugsweise perowskitische Oxide, zum Einsatz, die von der zugeleiteten Luft eine selektive Durchleitung von Sauerstoffionen in einen Abströmraum gewährleisten. Die Trennfunktion beruht dabei auf der unterschiedlichen Beweglichkeit einzelner Gasspezies in einer Stoffmischung im Membranmaterial. Die nunmehr zur Luftzerlegung vorgesehenen Membranen arbeiten dabei vorzugsweise bei hoher Temperatur von beispielsweise etwa 850 °C und können Sauerstoff ohne Verunreinigung an Stickstoff oder anderen Gasen bereitstellen. Die zur Luftzerlegung eingesetzten Zerlegungsanlagen umfassen dabei vorzugsweise einen Einström- und einen Abströmraum, die voneinander durch die Sauerstoff leitende Membran getrennt sind. Dabei kann beispielsweise in der Art einer rohrförmigen Ausgestaltung eine innenseitig von der Luft durchströmte Kapillarmembran in Form eines Membranrohres vorgesehen sein, von der aus an den Außenraum des Rohrbereichs der durchgeleitete Sauerstoff abgegeben wird. Selbstverständlich kommen aber auch andere geeignete Konzepte wie beispielsweise so genannte Multikanalelemente in Betracht.

Um die Flammentemperatur in der Brennkammer steuern zu können, ist vorteilhafterweise eine teilweise Rezirkulation der bei der Verbrennung entstehenden CO₂-H₂O-Gase in die Brennkammer vorgesehen. Dazu ist die Brennkammer vorteilhafterweise abgasseitig über eine Rezirkulations-Teilkreisleitung mit dem Abströmraum der Hochtemperatur-Membran-Luftzerlegungsanlage verbunden. Durch diese Rezirkulations-Teilkreisleitung gelangt eine vorzugsweise einstellbare Teilmenge des bei der Verbrennung entstehenden Kohlendioxids wieder in den Abströmraum der Luftzerlegungseinheit und wird dort mit dem eintretenden Sauerstoff vermischt. Das dabei erhaltene Sauerstoff-Kohlendioxid-Gemisch wird anschließend als Oxidationsmittel an die Brennkammer weitergeleitet. Damit ist die Zusammensetzung der Verbrennungsatmosphäre hinsichtlich der Anteile von Sauerstoff und Kohlendioxid einstellbar, so dass über eine geeignete Wahl des Mischungsverhältnisses die Flammentemperatur beeinflusst werden kann. Vorteilhafterweise ist dabei einer Steuereinheit vorgesehen, die den in der Rezirkulations-Teilkreisleitung geführten Massenstrom in Abhängigkeit von einem Sollwert für die Flammentemperatur in der Brennkammer einstellt.

Der nicht über die Rezirkulations-Teilkreisleitung in die Brennkammer zurückgeführte Anteil an erzeugtem Kohlendioxid/Wasser-Gas wird unter Vermeidung einer Freisetzung an die Umwelt vorzugsweise einer gezielten Entsorgung zugeführt. Dazu ist zweckmäßigerweise eine Abgasleitung für das überschüssige Kohlendioxid/Wasser-Gas vorgesehen, die an geeignet gewählter Stelle von der Rezirkulations-Teilkreisleitung abzweigt. Um dabei eine gezielte Entsorgung des Kohlendioxids unter Rückgriff auf herkömmliche Technologien zu ermöglichen, sollte eine sichere Abscheidung von evtl. noch mitgeführten Wasseranteilen gewährleistet sein. Dazu ist vorzugsweise in die Abgasleitung ein Kondensator geschaltet, in dem eine zuverlässige Kondensation des Wasseranteils erfolgt.

Vorteilhafterweise wird die bei der Verbrennung des Brennstoffs frei werdende Wärme in einer Dampfkraftanlage zur Erzeugung von Dampf für eine Dampfturbine genutzt. Die Dampfkraftanlage kann dabei insbesondere hinsichtlich der Verschaltung von Heizflächen oder weiteren Komponenten für einen möglichst hohen Wirkungsgrad ausgelegt sein. Hierzu ist vorteilhafterweise in der Art einer regenerativen Wärmerückgewinnung vorgesehen, dass die im Abgas aus der Brennkammer aufgrund der vergleichsweise hohen Temperatur des Abgases von beispielsweise etwa 850 °C noch mitgeführte Wärme in den Wasser-Dampf-Kreislauf der Dampfkraftanlage eingekoppelt wird. Dazu ist vorteilhafterweise in die insbesondere von der Rezirkulations-Teilkreisleitung abzweigende Abgasleitung der Brennkammer primärseitig ein Wärmeübertrager geschaltet, der sekundärseitig in den Wasser-Dampf-Kreislauf eines Dampferzeugers geschaltet ist.

Darüber hinaus können auch noch an weiteren Stellen der Medienströme geeignete Wärmeübertrager vorgesehen sein, über die in der Art einer Wärmerückgewinnung die Einkopplung von mitgeführter Restwärme in den Wasser-Dampf-Kreislauf möglich ist. Dabei kann beispielsweise berücksichtigt sein, dass der aus der Luftzerlegungsanlage abgeführte Stickstoff aufgrund der vergleichsweise hohen Arbeitstemperaturen der Hochtemperatur-Membran ebenfalls stark aufgeheizt ist, so dass hier wiederum nutzbare Abwärme zur Verfügung steht. Um diese Wirkungsgrad steigernd in besonders günstiger Weise zu nutzen, ist vorteilhafterweise in eine Stickstoff-Abgasleitung, die von der Hochtemperatur-Membran-Luftzerlegungsanlage ausgeht, primärseitig ein Wärmeübertrager geschaltet, der sekundärseitig in den Wasser-Dampf-Kreislauf des Dampferzeugers geschaltet ist.

Die mit der Erfindung erzielten Vorteile bestehen insbesondere darin, dass durch die Hochtemperatur-Membran-Luftzerlegung auf besonders günstige Weise Sauerstoff als geeignetes Oxidationsmittel zur Zuführung in die Brennkammer bereitgestellt werden kann. Damit ist mit vergleichsweise gering gehaltenem apparativen und betrieblichen Aufwand die Verbrennung des kohlenstoffhaltigen Brennstoffs in einer Sauerstoff-Kohlendioxid-Atmosphäre ermöglicht, so dass unter weitgehender Vermeidung von Stickoxid-Emissionen die Abgasströme ausschließlich mit Kohlendioxid belastet sind. Dieses ist aufgrund seiner im Abgas vorliegenden hohen Konzentration gezielt und auf wirtschaftliche Weise einer separaten Entsorgung zuführbar, so dass eine Freisetzung in die Umwelt vermieden werden kann. Durch die teilweise Rezirkulation der bei der Verbrennung entstehenden CO₂-H₂O-Gase kann zudem die Flammentemperatur in der Brennkammer auf einfache Weise gesteuert werden, so dass eine besonders hohe betriebliche Flexibilität erreichbar ist. Das Verbrennungskonzept ist somit für eine emissionsarme Kohleverbrennung mit Abscheideraten von Kohlendioxid von 90 % oder mehr in sämtlichen gängigen Kraftwerkstypen, insbesondere in extern befeuerten Dampfkraftanlagen, in Dampfkraftanlagen mit integrierter Kohlevergasung, in Gas- und Dampfturbinenanlagen oder auch in Dampfkraftwerken mit Druckkohlenstaubbefeuerung besonders geeignet.

Ein Ausführungsbeispiel der Erfindung wird anhand einer Zeichnung näher erläutert. Darin zeigen:
- FIG 1: schematisch eine Kraftwerksanlage, und
- FIG 2: schematisch ausschnittsweise eine Hochtemperatur-Membran-Luftzerlegungsanlage.

Gleiche Teile sind in beiden Figuren mit denselben Bezugszeichen versehen.

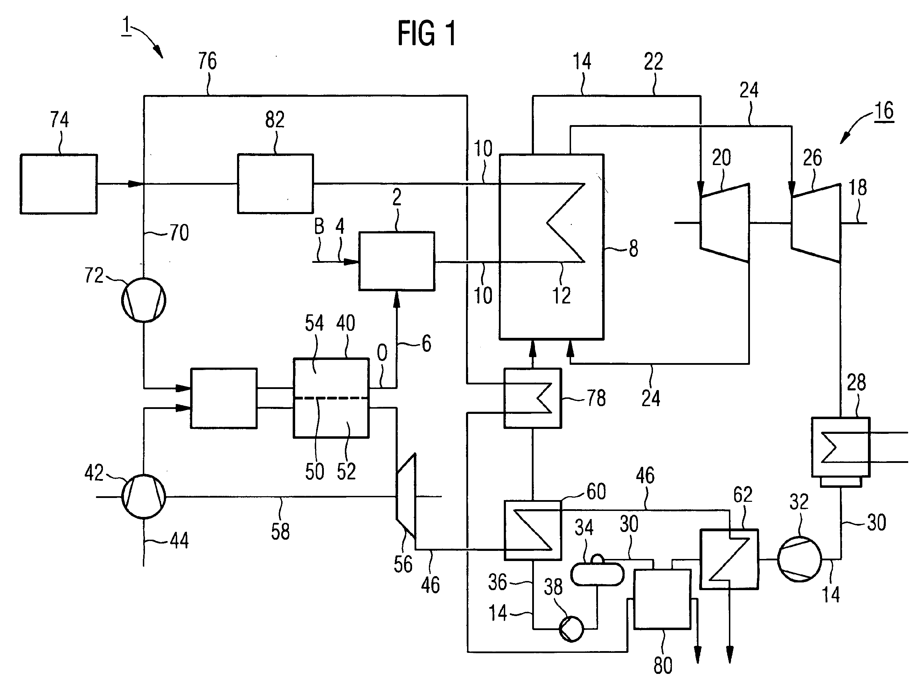

Die Kraftwerksanlage 1 gemäß FIG 1 ist für die Nutzung von Kohle als fossiler Energieträger bei der Erzeugung elektrischer Energie ausgelegt. Dazu umfasst die Kraftwerksanlage 1 eine Brennkammer 2, der über ein Versorgungssystem 4 ein kohlenstoffhaltiger Brennstoff B, insbesondere Kohle, zuführbar ist. Über eine Zuführleitung 6 ist der Brennkammer 2 ein Oxidationsmittel zuführbar. Die bei der Verbrennung des Brennstoffs B frei werdende Wärme aus der Brennkammer 2 ist auf einen Dampferzeuger 8 übertragbar. Im Ausführungsbeispiel ist dies dadurch angedeutet, dass eine Abgasleitung 10 aus der Brennkammer 2 über einen im Dampferzeuger 8 angeordneten Wärmeübertrager 12 geführt ist. Selbstverständlich ist aber jegliche andere Art eines geeigneten Wärmeübertrags von der Brennkammer 2 in den Dampferzeuger 8, beispielsweise über eine direkte Befeuerung, denkbar.

Dem Dampferzeuger 8 ist über einen Wasser-Dampf-Kreislauf 14 eine Dampfturbine 16 zugeschaltet, die über eine Welle 18 einen nicht näher dargestellten Generator antreibt. Im Ausführungsbeispiel ist die Dampfturbine 16 zweistufig ausgeführt und umfasst einen Hochdruckteil 20, der eingangsseitig über eine Dampfleitung 22 mit dem Dampferzeuger 8 verbunden ist. Ausgangsseitig ist der Hochdruckteil 20 über eine über den Dampferzeuger 8 geführte Überhitzerleitung 24 mit dem nachgeschaltete Niederdruckteil 26 der Dampfturbine 16 verbunden. Anstelle der somit zweistufig ausgeführten Dampfturbine 16 kann selbstverständlich auch eine dreistufige oder eine andersartige geeignet gewählte Dampfturbine vorgesehen sein.

Der Niederdruckteil 26 der Dampfturbine 16 ist abströmseitig mit einem Kondensator 28 verbunden, in dem der aus der Dampfturbine 16 abströmende entspannte Dampf kondensiert wird. Der Kondensator 28 ist seinerseits ausgangsseitig über eine Kondensatleitung 30, in die eine Kondensatpumpe 32 geschaltet ist, mit einem Speisewasserbehälter 34 verbunden. Dieser ist speisewasserseitig über eine Speisewasserleitung 36, in die eine Speisewasserpumpe 38 geschaltet ist, mit dem Dampferzeuger 8 verbunden, so dass ein geschlossener Wasser-Dampf-Kreislauf 14 entsteht.

Die Kraftwerksanlage 1 ist in besonderem Maße für eine emissionsarme Verbrennung des zugeführten fossilen Brennstoffs B bei hohem Anlagenwirkungsgrad und gering gehaltenem betrieblichen und apparativen Aufwand ausgelegt. Zur Sicherstellung besonders gering gehaltener Emissionswerte ist dabei vorgesehen, die Verbrennung des Brennstoffs B in einer vorwiegend aus Sauerstoff und Kohlendioxid bestehenden Atmosphäre durchzuführen. Um dies zu ermöglichen, ist der Brennkammer 2 über die Zuführleitung 6 zur Bereitstellung von Sauerstoff als Oxidationsmittel O eine Luftzerlegungsanlage 40 vorgeschaltet. Der Luftzerlegungsanlage 40 ist über einen Verdichter 42 und eine Ansaugleitung 44 Umgebungsluft zuführbar. Diese wird in der Luftzerlegungsanlage 40 in einen Sauerstoffanteil und in einen Stickstoffanteil separiert, wobei der Sauerstoffanteil über die Zuführleitung 6 in die Brennkammer 2 geführt wird. Der Stickstoffanteil hingegen wird über eine Stickstoff-Abgasleitung 46 abgeführt.

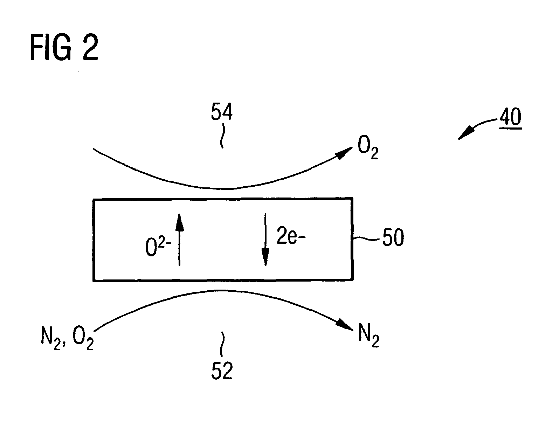

Um den betrieblichen Aufwand bei der Bereitstellung des Sauerstoffs als Oxidationsmittel O durch Luftzerlegung besonders gering zu halten, ist die Luftzerlegungsanlage 40 als Hochtemperatur-Membran-Luftzerlegungsanlage ausgestaltet. Wie der ausschnittsweisen Darstellung in FIG 2 entnehmbar ist, umfasst die Luftzerlegungsanlage 40 dazu eine Sauerstoffionen leitende Membran 50, die im Ausführungsbeispiel aus perowskitischem Oxid und als Keramik ausgeführt ist. Aufgrund der spezifischen Ionenleitfähigkeiten derartiger Membranmaterialien leitet die Membran 50 bei einer Arbeitstemperatur von beispielsweise mehr als 850 °C selektiv Sauerstoffionen. Um diesen Effekt zur Luftzerlegung zu nutzen, wird die aus Stickstoff (N₂) und Sauerstoff (O₂) bestehende Umgebungsluft einem Einströmraum 52 der Luftzerlegungsanlage 40 zugeführt. Von diesem aus durchwandern die Sauerstoffionen aufgrund der selektiven Ionenleitfähigkeit unter Zurücklassung der Stickstoff-Anteile die Membran 50 und reichern sich in einem Abströmraum 54 der Luftzerlegungsanlage 40 an. Von dort aus kann der Sauerstoff dann selektiv abgeführt werden.

Wie der Darstellung in FIG 1 entnehmbar ist, ist der Einströmraum 52 der Luftzerlegungsanlage 40 mit der Stickstoff-Abgasleitung 46 verbunden. Um dabei den Druck und die hohe Temperatur von etwa 850 °C des aus der Luftzerlegungsanlage 40 abströmenden Stroms, der vorwiegend aus Stickstoff besteht, wirkungsgradsteigernd nutzen zu können, ist in die Stickstoff-Abgasleitung 46 einerseits eine Entspannungsturbine 56 geschaltet, die über eine gemeinsame Welle 58 den Verdichter 42 antreibt. Des Weiteren sind in die Stickstoff-Abgasleitung 46 primärseitig ein erster Wärmeübertrager 60 und ein zweiter Wärmeübertrager 62 geschaltet, die in der Art einer rekuperativen Wärmerückgewinnung eine Einkopplung der im Abgas mitgeführten Wärme in den Wasser-Dampf-Kreislauf 14 des Dampferzeugers 8 gewährleisten sollen. Dazu ist der Wärmeübertrager 60 sekundärseitig in die Speisewasserleitung 36 und der zweite Wärmeübertrager 62 sekundärseitig in die Kondensatleitung 30 geschaltet.

Um die Flammentemperatur in der Brennkammer 2 beeinflussen zu können, ist eine teilweise Rezirkulation des aus der Brennkammer 2 abströmenden Abgases vorgesehen. Dazu ist die Brennkammer 2 abgasseitig über eine an die Abgasleitung 10 angeschlossene Rezirkulations-Teilkreisleitung 70, in die ein Hochtemperatur-Umwälzgebläse 72 geschaltet ist, mit dem Abströmraum 54 der Luftzerlegungsanlage 40 verbunden. Dadurch wird ein Teil des aus der Brennkammer 2 abströmenden Abgasstroms, der ausschließlich aus Kohlendioxid, Wasser und geringen Restsauerstoffanteilen besteht, in den Abströmraum 54 der Luftzerlegungsanlage 40 zurückgeführt und dort mit dem aus der Luftzerlegung gewonnenen Sauerstoff vermischt.

Das solchermaßen erhaltene Kohlendioxid-Sauerstoff-Gemisch wird anschließend über die Zuführleitung 6 in die Brennkammer 2 eingespeist. Damit ist über eine geeignete Einstellung des über die Rezirkulations-Teilkreisleitung 70 geführten Massenstroms das Kohlendioxid-Sauerstoff-Mengenverhältnis bei der Zuführung des Oxidationsmittels O in die Brennkammer 2 und damit die Brenngasatmosphäre einstellbar. Um über eine geeignete Variation dieses Verhältnisses die Flammentemperatur in der Brennkammer 2 gezielt beeinflussen zu können, ist der Rezirkulations-Teilkreisleitung 70 eine Regeleinrichtung 74 zugeordnet, die in Abhängigkeit von einem ermittelten Istwert für die Flammentemperatur und im Hinblick auf einen gewünschten Sollwert für die Flammentemperatur den Massenstrom in der Rezirkulations-Teilkreisleitung 70 geeignet einstellt.

Im Ausführungsbeispiel erfolgt diese Einstellung über die Einstellung eines geeigneten Verzweigungsverhältnisses des in der Abgasleitung 10 geführten Abgas-Massenstroms auf die Rezirkulations-Teilkreisleitung 70 einerseits und eine von dieser abzweigende Abgasleitung 76. Dabei wird das für die Rezirkulation nicht benötigte Abgas über die Abgasleitung 76 abgeführt.

Um die in diesem mitgeführte Wärme wirkungsgradsteigernd nutzen zu können, ist auch hier eine Wärmerückgewinnung durch Wärmetransfer in den Wasser-Dampf-Kreislauf 14 vorgesehen. Dazu ist in die Abgasleitung 76 primärseitig ein Wärmeübertrager 78 geschaltet, der sekundärseitig in die Speisewasserleitung 36 geschaltet ist. Um das in der Abgasleitung 46 geführte Abgas, das vorwiegend aus Kohlendioxid- und Wasseranteilen besteht, unter Vermeidung einer Freisetzung an die Umwelt einer gezielten Entsorgung zuführen zu können, ist eine Abscheidung der Wasseranteile vorgesehen. Dazu ist die Abgasleitung 76 über einen mit der Kondensatleitung 30 verbundenen Kondensator 80 geführt. Nach der Wasserabscheidung im Kondensator 80 umfasst das verbliebene Abgas bis auf geringe Restmengen ausschließlich noch Kohlendioxid-Anteile, die einer gezielten und systematischen Entsorgung zugeführt werden können.

Zur bedarfsweisen Partikelabtrennung und Gasreinigung ist im Übrigen in die Abgasleitung 10 ein keramischer Filter 82 geschaltet.

Die Betriebsparameter der Kraftwerksanlage 1 werden naturgemäß betriebspunkt- und lastabhängig geeignet gewählt.

## Patentansprüche

1. Kraftwerksanlage (1) mit einer Brennkammer (2) und mit einem durch die in der Brennkammer (2) frei werdende Wärme beheizten Dampferzeuger (8), wobei der Brennkammer (2) ein kohlenstoffhaltiger Brennstoff (B) und ein Oxidationsmittel (O) zuführbar sind, wobei der Brennkammer (2) zur Bereitstellung des Oxidationsmittels (O) eine Hochtemperatur-Membran-Luftzerlegungsanlage (40) vorgeschaltet ist, und wobei die Brennkammer (2) abgasseitig über eine Rezirkulations-Teilkreisleitung (70) mit der Hochtemperatur-Membran-Luftzerlegungsanlage (40) verbunden ist.

2. Kraftwerksanlage (1) nach Anspruch 1, deren Hochtemperatur-Membran-Luftzerlegungsanlage (40) eine Anzahl von Perowskit-Membranen (50) umfasst.

3. Kraftwerksanlage (1) nach Anspruch 1 oder 2, bei der eine Regeleinrichtung (74) den in der Rezirkulations-Teilkreisleitung (70) geführten Massenstrom in Abhängigkeit von einem Sollwert für die Flammentemperatur in der Brennkammer (2) einstellt.

4. Kraftwerksanlage (1) nach einem der Ansprüche 1 bis 3, bei der abgasseitig der nicht rezirkulierte Abgasstrom über eine Abgasleitung (76) abgeführt wird, in die primärseitig ein Wärmeübertrager (78) und ein Kondensator (80) geschaltet sind, die beide sekundärseitig in den Wasser-Dampf-Kreislauf (14) eines Dampferzeugers (8) geschaltet sind.

5. Kraftwerksanlage (1) nach einem der Ansprüche 1 bis 4, von deren Hochtemperatur-Membran-Luftzerlegungsanlage (40) eine Stickstoff-Abgasleitung (46) ausgeht, in die primärseitig eine Anzahl von Wärmeübertragern (60, 62) geschaltet ist, die sekundärseitig in den Wasser-Dampf-Kreislauf (14) eines Dampferzeugers (8) geschaltet sind.

6. Verfahren zum Betreiben einer Kraftwerksanlage (1), bei dem Umgebungsluft angesaugt und in den Einströmraum (52) einer Hochtemperatur-Membran-Luftzerlegungsanlage (40) eingeleitet wird, wobei durch eine Membran (50) in den Abströmraum (54) der Luftzerlegungsanlage (40) übertretender Sauerstoff als Oxidationsmittel (O) einer Brennkammer (2) zugeführt und dort mit einem kohlenstoffhaltigen Brennstoff (B) verbrannt wird, wobei ein Teil der aus der Brennkammer (2) abströmenden Abgase in den Abströmraum (54) der Luftzerlegungsanlage (40) rezirkuliert wird, und wobei die in der Brennkammer (2) frei werdende Wärme zur Beheizung eines in einen Wasser-Dampf-Kreislauf (14) eingeschalteten Dampferzeugers (8) genutzt wird.

7. Verfahren nach Anspruch 6, bei dem der Dampferzeuger (8) dadurch beheizt wird, dass die Abgase über einen im Dampferzeuger (8) angeordneten Wärmeübertrager (12) geführt werden, wobei der Abgasstrom nach dem Verlassen des Wärmeübertragers (12) in einen Rezirkulations-Teilstrom und in einen nicht rezirkulierten Teilstrom verzweigt wird.

8. Verfahren nach Anspruch 6, bei dem der Dampferzeuger (8) durch direkte Befeuerung beheizt wird, wobei der von der Brennkammer (2) des Dampferzeugers (8) abströmende Abgasstrom in einen Rezirkulations-Teilstrom und in einen nicht rezirkulierenden Teilstrom verzweigt wird.

9. Verfahren nach einem der Ansprüche 6 bis 8, bei dem der rezirkulierte Abgas-Massenstrom in Abhängigkeit von einem Sollwert für die Flammentemperatur in der Brennkammer (2) eingestellt wird.

## Claims

1. Power plant (1) with a combustion chamber (2) and with a steam generator (8) heated by the heat released in the combustion chamber (2), the combustion chamber (2) being capable of being supplied with a carbon-containing fuel (B) and with an oxidant (0), the combustion chamber (2) being preceded by a high-temperature membrane-type air separation installation (40) with a purpose of providing the oxidant (0), and the combustion chamber (2) being connected on the exhaust-gas side to the high-temperature membrane-type air separation installation (40) via a recirculation sub-circuit line (70).

2. Power plant according to Claim 1, the high-temperature membrane-type air separation installation (40) of which comprises a number of perovskite membranes (50).

3. Power plant (1) according to Claim 1 or 2, in which a regulating device (74) sets the mass flow carried in the recirculation sub-circuit line (70) as a function of a desired value for the flame temperature in the combustion chamber (2).

4. Power plant (1) according to one of Claims 1 to 3, in which the non-recirculated exhaust-gas stream is discharged on the exhaust-gas side via an exhaust-gas line (76), into which are inserted on the primary side a heat exchanger (78) and a condenser (80) which are both inserted on the secondary side into the water-steam circuit (14) of a steam generator (8).

5. Power plant (1) according to one of Claims 1 to 4, from the high-temperature membrane-type air separation installation (40) of which emanates a nitrogen exhaust-gas line (46), into which are inserted on the primary side a number of heat exchangers (60, 62) which are inserted on the secondary side into the water-steam circuit (14) of a steam generator (8).

6. Method for operating a power plant (1), in which ambient air is sucked in and is introduced into the inflow space (52) of a high-temperature membrane-type air separation installation (40), oxygen which overflows through a membrane (50) into the outflow space (54) of the air separation installation (40) being supplied as oxidant (0) to a combustion chamber (2) and being burned there by means of a carbon-containing fuel (B), some of the exhaust gases which flow out from the combustion chamber (2) being recirculated into the outflow space (54) of the air separation installation (40), and the heat released in the combustion chamber (2) being utilized to heat a steam generator (8) incorporated into a water-steam circuit (14).

7. Method according to Claim 6, in which the steam generator (8) is heated in that the exhaust gases are routed via a heat exchanger (12) arranged in the steam generator (8), the exhaust-gas stream, after leaving the heat exchanger (12), being branched into a recirculation substream and a non-recirculated substream.

8. Method according to Claim 6, in which the steam generator (8) is heated by direct firing, the exhaust-gas stream which flows out from the combustion chamber (2) of the steam generator (8) being branched into a recirculation substream and a non-recirculating substream.

9. Method according to one of Claims 6 to 8, in which the recirculated exhaust-gas mass flow is set as a function of a desired value for the flame temperature in the combustion chamber (2).

## Revendications

1. Centrale ( 1 ) électrique ayant une chambre de combustion ( 2 ) et un générateur ( 8 ) de vapeur chauffé par la vapeur dégagée dans la chambre de combustion ( 2 ), un combustible ( B ) carboné et un agent ( O ) d'oxydation pouvant être envoyés à la chambre de combustion ( 2 ), une installation ( 40 ) de fractionnement de l'air à membrane à haute température étant, pour la préparation de l'agent ( O ) d'oxydation, montée en amont de la chambre de combustion ( 2 ) et la chambre de combustion ( 2 ) communiquant, du côté du gaz perdu, avec l'installation ( 40 ) de fractionnement d'air à membrane à haute température par un circuit ( 70 ) partiel de recirculation.

2. Centrale ( 1 ) électrique suivant la revendication 1, dont l'installation ( 40 ) de fractionnement d'air à membrane à haute température comprend un certain nombre de membranes ( 50 ) de perovskite.

3. Centrale ( 1 ) électrique suivant la revendication 1 ou 2, dans laquelle un dispositif ( 74 ) de régulation règle le courant massique passant dans le conduit ( 70 ) de circuit partiel de recirculation en fonction d'une valeur de consigne de la température de flamme dans la chambre de combustion ( 2 ).

4. Centrale ( 1 ) électrique suivant l'une des revendications 1 à 3, dans laquelle, du côté du gaz perdu, le courant de gaz perdu qui n'est pas recirculé est évacué par un conduit ( 76 ) pour le gaz perdu, conduit dans lequel sont montés, du côté primaire, un transmetteur ( 78 ) de chaleur et un condenseur ( 80 ), qui sont montés tous deux du côté secondaire dans le circuit ( 14 ) eau-vapeur d'un générateur ( 8 ) de vapeur.

5. Centrale ( 1 ) électrique suivant l'une des revendications 1 à 4, dont l'installation ( 40 ) de fractionnement d'air à membrane à haute température part d'un conduit ( 46 ) pour de l'azote-gaz perdu, conduit dans lequel sont montés, du côté primaire, un certain nombre de transmetteurs ( 60, 62 ) de chaleur, qui sont montés du côté secondaire dans le circuit ( 14 ) eau-vapeur d'un générateur ( 8 ) de vapeur.

6. Procédé pour faire fonctionner une centrale ( 1 ) électrique, dans lequel on aspire de l'air ambiant et on l'introduit dans l'espace ( 52 ) d'entrée d'une installation ( 40 ) de fractionnement d'air à membrane à haute température, dans lequel on envoie, à une chambre de combustion ( 2 ) comme agent ( O ) d'oxydation, de l'oxygène passant à travers une membrane ( 50 ) dans l'espace ( 54 ) de sortie de l'installation ( 40 ) de fractionnement d'air et on l'y brûle avec un combustible ( B ) carboné, une partie des gaz perdus sortant de la chambre de combustion ( 2 ) étant recirculée dans l'espace ( 54 ) de sortie de l'installation ( 40 ) de fractionnement d'air et la chaleur dégagée dans la chambre de combustion ( 2 ) étant utilisée pour chauffer un générateur ( 8 ) de vapeur inséré dans un circuit ( 14 ) eau-vapeur.

7. Procédé suivant la revendication 6, dans lequel on chauffe le générateur ( 8 ) de vapeur en guidant les gaz perdus sur un transmetteur ( 12 ) de vapeur monté dans le générateur ( 8 ) de vapeur, le courant de gaz perdu bifurquant, après avoir quitté le transmetteur ( 12 ) de chaleur, en un sous-courant de recirculation et en un sous-courant, qui n'est pas recirculé.

8. Procédé suivant la revendication 6, dans lequel on chauffe le générateur ( 8 ) de vapeur par combustion directe, le courant de gaz perdu, sortant de la chambre de combustion ( 2 ) du générateur ( 8 ) de vapeur, bifurquant en un sous-courant de recirculation et en un sous-courant qui n'est pas recirculé.

9. Procédé suivant l'une des revendications 6 à 8, dans lequel on règle le courant massique du gaz perdu recirculé en fonction d'une valeur de consigne pour la température de flamme dans la chambre de combustion ( 2 ).
